# EUROPEAN PATENT APPLICATION

(11) **EP 4 852 466 A1**
(43) Date of publication of application: **09.12.2026**
(21) Application number: 24921090.7
(22) Date of filing: 04.02.2024
(51) Int. Cl.: H04W 4/06

(54) **COMMUNICATION METHOD, NETWORK DEVICE, TERMINAL, COMMUNICATION SYSTEM AND STORAGE MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Stöckeler, Ferdinand
(86) International application number: PCT/CN2024/075871
(87) International publication number: WO 2025/161037

(57) **Abstract**

Embodiments of the present disclosure relate to a communication method, a network device, a terminal, a communication system and a storage medium. The communication method can be applied to a network device, and the method comprises: sending first information, wherein the first information is used for indicating an area corresponding to a broadcast service. Therefore, in the embodiments of the present disclosure, the network device sends the first information used for indicating the area corresponding to the broadcast service, so that a terminal in the area corresponding to the broadcast service receives service data corresponding to the broadcast service, and other terminals can be prevented from being interfered.

## Description

### FIELD

The present disclosure relates to the field of communication technology, and particularly to a communication method, a network device, a terminal, a communication system, and a storage medium.

### BACKGROUND

In the development and evolution process of telecommunication network technologies, a communication network has integrated non-terrestrial network (NTN) technologies and support satellite access technologies. That is, a terminal may access a core network through a satellite access network to carry out a service. Considering a large coverage of an NTN, it is needed to configure an effective area for a broadcast service of the NTN. Users outside the effective area do not need to receive service data of the broadcast service, thereby avoiding interference.

### SUMMARY

Considering a large coverage of a non-terrestrial network (NTN), for a broadcast service of the NTN, in a case where a terminal that is not within a service reception area receives an area-associated broadcast service of the area, the terminal will be interfered. How to prevent such terminal from being interfered has become a problem to be solved.

Embodiments of the present disclosure provides a communication method, a network device, a terminal, a communication system, and a storage medium. The method may ensure that a terminal located within an area corresponding to a broadcast service receives service data corresponding to the broadcast service, and realize interference immunity for other terminals.

According to a first aspect of the embodiments of the present disclosure, there is provided a communication method, applied to a network device, including: sending first information, in which the first information indicates an area corresponding to a broadcast service.

According to a second aspect of the embodiments of the present disclosure, there is provided a communication method, applied to a terminal, including: receiving first information, in which the first information indicates an area corresponding to a broadcast service.

According to a third aspect of the embodiments of the present disclosure, there is provided a network device, including: a first transceiver module, configured to send first information, in which the first information indicates an area corresponding to a broadcast service.

According to a fourth aspect of the embodiments of the present disclosure, there is provided a terminal, including: a second transceiver module, configured to receive first information, in which the first information indicates an area corresponding to a broadcast service.

According to a fifth aspect of the embodiments of the present disclosure, there is provided a network device, including: at least one processor; and a memory having stored therein instructions that, when executed by the network device, cause the network device to implement the communication method as described in the first aspect.

According to a sixth aspect of the embodiments of the present disclosure, there is provided a terminal, including: at least one processor; and a memory having stored therein instructions that, when executed by the terminal, cause the terminal to implement the communication method as described in the second aspect.

According to a seventh aspect of the embodiments of the present disclosure, there is provided a communication system, including: a network device, configured to implement the communication method as described in the first aspect; and a terminal, configured to implement the communication method as described in the second aspect.

According to an eighth aspect of the embodiments of the present disclosure, there is provided a storage medium, having stored therein instructions that, when executed on a communication device, cause the communication device to perform the communication method as described in the first aspect or the second aspect.

According to a ninth aspect of the embodiments of the present disclosure, there is provided a program product that, when executed by a communication device, causes the communication device to perform the communication method as described in the first aspect or the second aspect.

According to a tenth aspect of the embodiments of the present disclosure, there is provided a computer program that, when run on a computer, causes the computer to execute the communication method as described in the first aspect or the second aspect.

According to an eleventh aspect of the embodiments of the present disclosure, there is provided a chip or a chip system. The chip or chip system includes processing circuitry. The processing circuitry is configured to perform the communication method as described in the first aspect or the second aspect.

With the embodiments of the present disclosure, the network device sends the first information that indicates the area corresponding to the broadcast service, such that the terminal located in the area corresponding to the broadcast service may receive the service data of the broadcast service, and interference immunity is achieved for other terminals.

As may be appreciated, the above general description and the following detailed description are for illustrative purposes only, but shall not be construed as limiting the scope of the present disclosure.

### BRIEF DESCRIPTION OF THE DRAWINGS

In order to illustrate the technical solutions of the embodiments of the present disclosure in a clearer manner, the drawings required for the description of the embodiments will be described hereinafter. The following drawings merely relate to some embodiments of the present disclosure, but shall not be construed as limiting the scope of the present disclosure.
FIG. 1 is a schematic diagram illustrating an architecture of a communication system provided according to an embodiment of the present disclosure.
FIG. 2 is a schematic interaction diagram of a communication method according to an embodiment of the present disclosure.
FIG. 3A is a schematic flowchart of a communication method performed by a network device according to an embodiment of the present disclosure.
FIG. 3B is a schematic flowchart of a communication method performed by a terminal according to an embodiment of the present disclosure.
FIG. 4A is another schematic flowchart illustrating a communication method performed by a network device according to an embodiment of the present disclosure.
FIG. 4B is another schematic flowchart illustrating a communication method performed by a terminal according to an embodiment of the present disclosure.
FIG. 5A is a block diagram illustrating a communication device according to an embodiment of the present disclosure.
FIG. 5B is a block diagram illustrating a communication device according to an embodiment of the present disclosure.
FIG. 6A is a block diagram of a communication device according to an embodiment of the present disclosure.
FIG. 6B is a block diagram of a chip provided in an embodiment of the present disclosure.

### DETAILED DESCRIPTION

Embodiments of the present disclosure provide a communication method, a network device, a terminal, a communication system, and a storage medium.

In a first aspect, embodiments of the present disclosure provide a communication method, applied to a network device, including: sending first information, in which the first information indicates an area corresponding to a broadcast service.

In these embodiments of the present disclosure, the network device sends the first information that indicates the area corresponding to the broadcast service, such that the terminal located in the area corresponding to the broadcast service may receive the service data of the broadcast service, and interference immunity is achieved for other terminals.

In combination with some embodiments of the first aspect, in some embodiments, the area corresponding to the broadcast service is an effective area for the broadcast service.

In combination with some embodiments of the first aspect, in some embodiments, the first information includes at least one of: identification information of the area, in which the identification information of the area indicates configuration information of the area; or configuration information of the area, in which the configuration information of the area indicates the area.

In combination with some embodiments of the first aspect, in some embodiments, the broadcast service is at least one of: a multimedia broadcast service; an earthquake and tsunami warning system; or a commercial mobile alert system.

In combination with some embodiments of the first aspect, in some embodiments, the method further includes: configuring an area for the broadcast service.

In combination with some embodiments of the first aspect, in some embodiments, the broadcast service is a multimedia broadcast service, and the method further includes: configuring an area for a multimedia broadcast service of a service type.

In combination with some embodiments of the first aspect, in some embodiments, the multimedia broadcast service has a plurality of service types, and areas configured for the multimedia broadcast services of the plurality of service types are the same, or areas configured for the multimedia broadcast services of the plurality of service types are different.

In combination with some embodiments of the first aspect, in some embodiments, the multimedia broadcast service of the service type is associated with a session of the multimedia broadcast service.

In combination with some embodiments of the first aspect, in some embodiments, for the multimedia broadcast service, the first information is associated with at least one of: the multimedia broadcast service; the service type of the multimedia broadcast service; or a session of the multimedia broadcast service.

In combination with some embodiments of the first aspect, in some embodiments, the first information is associated with the service type of the multimedia broadcast service or the first information is associated with the session of the multimedia broadcast service, and the first information is further associated with identification information of the session of the multimedia broadcast service.

In combination with some embodiments of the first aspect, in some embodiments, the first information is associated with the multimedia broadcast service, and the first information is carried and sent through configuration information of the multimedia broadcast service.

In combination with some embodiments of the first aspect, in some embodiments, the first information is the configuration information of the area, the configuration information of the area is associated with the service type of the multimedia broadcast service or the session of the multimedia broadcast service, and the configuration information of the area is carried and sent through configuration information of the multimedia broadcast service.

In combination with some embodiments of the first aspect, in some embodiments, the first information is identification information of the area and configuration information of the area, the identification information of the area is associated with the service type of the multimedia broadcast service or the session of the multimedia broadcast service, the configuration information of the area is carried and sent through configuration information of the multimedia broadcast service, and the identification information of the area is carried and sent through configuration information of the session.

In combination with some embodiments of the first aspect, in some embodiments, the first information is carried and sent through system information.

In combination with some embodiments of the first aspect, in some embodiments, configuration information of the area includes at least one of: second information, in which the second information indicates a coordinate of the area in a reference coordinate system; third information, in which the third information indicates a city; or fourth information, in which the fourth information indicates a country.

In combination with some embodiments of the first aspect, in some embodiments, a shape of the area represented by the coordinate indicated by the second information includes at least one of: a rectangle; a polygon; a circle; or a line.

In combination with some embodiments of the first aspect, in some embodiments, the third information includes a city code.

In combination with some embodiments of the first aspect, in some embodiments, the fourth information includes a country code.

In a second aspect, embodiments of the present disclosure provide a communication method, applied to a terminal, including: receiving first information, in which the first information indicates an area corresponding to a broadcast service.

In these embodiments of the present disclosure, the terminal receives the first information that indicates the area corresponding to the broadcast service, such that the terminal located in the area corresponding to the broadcast service receives the service data of the broadcast service, while a terminal outside the area corresponding to the broadcast service does not need to receive the service data of the broadcast service, thereby achieving interference immunity for other terminals and reducing power consumption.

In combination with some embodiments of the second aspect, in some embodiments, the area corresponding to the broadcast service is an effective area for the broadcast service.

In combination with some embodiments of the second aspect, in some embodiments, the method further includes: determining, based on the first information, whether the terminal is located in the area.

In combination with some embodiments of the second aspect, in some embodiments, the terminal is located in the area, and the method further includes: receiving service data of the broadcast service.

In combination with some embodiments of the second aspect, in some embodiments, the first information includes at least one of: identification information of the area, in which the identification information of the area indicates configuration information of the area; or configuration information of the area, in which the configuration information of the area indicates the area.

In combination with some embodiments of the second aspect, in some embodiments, the broadcast service is at least one of: a multimedia broadcast service; an earthquake and tsunami warning system; or a commercial mobile alert system.

In combination with some embodiments of the second aspect, in some embodiments, the broadcast service corresponds to an area.

In combination with some embodiments of the second aspect, in some embodiments, the broadcast service is a multimedia broadcast service, and a multimedia broadcast service of a service type corresponds to an area.

In combination with some embodiments of the second aspect, in some embodiments, the multimedia broadcast service has a plurality of service types, and areas corresponding to the multimedia broadcast services of the plurality of service types are the same, or areas corresponding to the multimedia broadcast services of the plurality of service types are different.

In combination with some embodiments of the second aspect, in some embodiments, the multimedia broadcast service of the service type is associated with a session of the multimedia broadcast service.

In combination with some embodiments of the second aspect, in some embodiments, for the multimedia broadcast service, the first information is associated with at least one of: the multimedia broadcast service; the service type of the multimedia broadcast service; or a session of the multimedia broadcast service.

In combination with some embodiments of the second aspect, in some embodiments, the first information is associated with the service type of the multimedia broadcast service or the first information is associated with the session of the multimedia broadcast service, and the first information is further associated with identification information of the session of the multimedia broadcast service.

In combination with some embodiments of the second aspect, in some embodiments, the first information is associated with the multimedia broadcast service, and the first information carried in configuration information of the multimedia broadcast service is received.

In combination with some embodiments of the second aspect, in some embodiments, the first information is the configuration information of the area, the configuration information of the area is associated with the service type of the multimedia broadcast service or the session of the multimedia broadcast service, and the configuration information of the area carried in configuration information of the multimedia broadcast service is received.

In combination with some embodiments of the second aspect, in some embodiments, the first information is the identification information of the area and the configuration information of the area, the identification information of the area is associated with the service type of the multimedia broadcast service or the session of the multimedia broadcast service, the configuration information of the area carried in the configuration information of the multimedia broadcast service and the identification information of the area carried in configuration information of the session are received.

In combination with some embodiments of the second aspect, in some embodiments, the first information is not associated with the session of the multimedia broadcast service, and the first information is applied to all service types of the multimedia broadcast service or all sessions of the multimedia broadcast service.

In combination with some embodiments of the second aspect, in some embodiments, the first information carried in system information is received.

In combination with some embodiments of the second aspect, in some embodiments, the configuration information of the area includes at least one of: second information, in which the second information indicates a coordinate of the area in a reference coordinate system; third information, in which the third information indicates a city; or fourth information, in which the fourth information indicates a country.

In combination with some embodiments of the second aspect, in some embodiments, a shape of the area represented by the coordinate indicated by the second information includes at least one of: a rectangle; a polygon; a circle; or a line.

In combination with some embodiments of the second aspect, in some embodiments, the third information includes a city code.

In combination with some embodiments of the second aspect, in some embodiments, the fourth information includes a country code.

In combination with some embodiments of the second aspect, in some embodiments, the configuration information of the area includes the city and/or the country, and the method further includes: determining, based on a local map, actual geographic area information corresponding to the city and/or the country.

In a third aspect, embodiments of the present disclosure provide a network device, including: a first transceiver module, configured to send first information, in which the first information indicates an area corresponding to a broadcast service.

In combination with some embodiments of the third aspect, in some embodiments, the area corresponding to the broadcast service is an effective area for the broadcast service.

In combination with some embodiments of the third aspect, in some embodiments, the first information includes at least one of: identification information of the area, in which the identification information of the area indicates configuration information of the area; or configuration information of the area, in which the configuration information of the area indicates the area.

In combination with some embodiments of the third aspect, in some embodiments, the broadcast service is at least one of: a multimedia broadcast service; an earthquake and tsunami warning system; or a commercial mobile alert system.

In combination with some embodiments of the third aspect, in some embodiments, the first transceiver module is further configured to configure an area for the broadcast service.

In combination with some embodiments of the third aspect, in some embodiments, the broadcast service is a multimedia broadcast service, and the first transceiver module is further configured to configure an area for a multimedia broadcast service of a service type.

In combination with some embodiments of the third aspect, in some embodiments, the multimedia broadcast service has a plurality of service types, and areas configured for the multimedia broadcast services of the plurality of service types are the same, or areas configured for the multimedia broadcast services of the plurality of service types are different.

In combination with some embodiments of the third aspect, in some embodiments, the multimedia broadcast service of the service type is associated with a session of the multimedia broadcast service.

In combination with some embodiments of the third aspect, in some embodiments, for the multimedia broadcast service, the first information is associated with at least one of: the multimedia broadcast service; the service type of the multimedia broadcast service; or a session of the multimedia broadcast service.

In combination with some embodiments of the third aspect, in some embodiments, the first information is associated with the service type of the multimedia broadcast service or the first information is associated with the session of the multimedia broadcast service, and the first information is further associated with identification information of the session of the multimedia broadcast service.

In combination with some embodiments of the third aspect, in some embodiments, the first information is associated with the multimedia broadcast service, and the first information is carried and sent through configuration information of the multimedia broadcast service.

In combination with some embodiments of the third aspect, in some embodiments, the first information is the configuration information of the area, the configuration information of the area is associated with the service type of the multimedia broadcast service or the session of the multimedia broadcast service, and the configuration information of the area is carried and sent through configuration information of the multimedia broadcast service.

In combination with some embodiments of the third aspect, in some embodiments, the first information is identification information of the area and configuration information of the area, the identification information of the area is associated with the service type of the multimedia broadcast service or the session of the multimedia broadcast service, the configuration information of the area is carried and sent through configuration information of the multimedia broadcast service, and the identification information of the area is carried and sent through configuration information of the session.

In combination with some embodiments of the third aspect, in some embodiments, the first information is carried and sent through system information.

In combination with some embodiments of the third aspect, in some embodiments, configuration information of the area includes at least one of: second information, in which the second information indicates a coordinate of the area in a reference coordinate system; third information, in which the third information indicates a city; or fourth information, in which the fourth information indicates a country.

In combination with some embodiments of the third aspect, in some embodiments, a shape of the area represented by the coordinate indicated by the second information includes at least one of: a rectangle; a polygon; a circle; or a line.

In combination with some embodiments of the third aspect, in some embodiments, the third information includes a city code.

In combination with some embodiments of the third aspect, in some embodiments, the fourth information includes a country code.

In a fourth aspect, embodiments of the present disclosure provide a terminal, including: a second transceiver module, configured to receive first information, in which the first information indicates an area corresponding to a broadcast service.

In combination with some embodiments of the fourth aspect, in some embodiments, the area corresponding to the broadcast service is an effective area for the broadcast service.

In combination with some embodiments of the fourth aspect, in some embodiments, the second transceiver module is further configured to determine, based on the first information, whether the terminal is located in the area.

In combination with some embodiments of the fourth aspect, in some embodiments, the terminal is located in the area, and the second transceiver module is further configured to receive service data of the broadcast service.

In combination with some embodiments of the fourth aspect, in some embodiments, the first information includes at least one of: identification information of the area, in which the identification information of the area indicates configuration information of the area; or configuration information of the area, in which the configuration information of the area indicates the area.

In combination with some embodiments of the fourth aspect, in some embodiments, the broadcast service is at least one of: a multimedia broadcast service; an earthquake and tsunami warning system; or a commercial mobile alert system.

In combination with some embodiments of the fourth aspect, in some embodiments, the broadcast service corresponds to an area.

In combination with some embodiments of the fourth aspect, in some embodiments, the broadcast service is a multimedia broadcast service, and a multimedia broadcast service of a service type corresponds to an area.

In combination with some embodiments of the fourth aspect, in some embodiments, the multimedia broadcast service has a plurality of service types, and areas corresponding to the multimedia broadcast services of the plurality of service types are the same, or areas corresponding to the multimedia broadcast services of the plurality of service types are different.

In combination with some embodiments of the fourth aspect, in some embodiments, the multimedia broadcast service of the service type is associated with a session of the multimedia broadcast service.

In combination with some embodiments of the fourth aspect, in some embodiments, for the multimedia broadcast service, the first information is associated with at least one of: the multimedia broadcast service; the service type of the multimedia broadcast service; or a session of the multimedia broadcast service.

In combination with some embodiments of the fourth aspect, in some embodiments, the first information is associated with the service type of the multimedia broadcast service or the first information is associated with the session of the multimedia broadcast service, and the first information is further associated with identification information of the session of the multimedia broadcast service.

In combination with some embodiments of the fourth aspect, in some embodiments, the first information is associated with the multimedia broadcast service, and the first information carried in configuration information of the multimedia broadcast service is received.

In combination with some embodiments of the fourth aspect, in some embodiments, the first information is the configuration information of the area, the configuration information of the area is associated with the service type of the multimedia broadcast service or the session of the multimedia broadcast service, and the configuration information of the area carried in configuration information of the multimedia broadcast service is received.

In combination with some embodiments of the fourth aspect, in some embodiments, the first information is the identification information of the area and the configuration information of the area, the identification information of the area is associated with the service type of the multimedia broadcast service or the session of the multimedia broadcast service, the configuration information of the area carried in the configuration information of the multimedia broadcast service and the identification information of the area carried in configuration information of the session are received.

In combination with some embodiments of the fourth aspect, in some embodiments, the first information is not associated with the session of the multimedia broadcast service, and the first information is applied to all service types of the multimedia broadcast service or all sessions of the multimedia broadcast service.

In combination with some embodiments of the fourth aspect, in some embodiments, the first information carried in system information is received.

In combination with some embodiments of the fourth aspect, in some embodiments, the configuration information of the area includes at least one of: second information, in which the second information indicates a coordinate of the area in a reference coordinate system; third information, in which the third information indicates a city; or fourth information, in which the fourth information indicates a country.

In combination with some embodiments of the fourth aspect, in some embodiments, a shape of the area represented by the coordinate indicated by the second information includes at least one of: a rectangle; a polygon; a circle; or a line.

In combination with some embodiments of the fourth aspect, in some embodiments, the third information includes a city code.

In combination with some embodiments of the fourth aspect, in some embodiments, the fourth information includes a country code.

In combination with some embodiments of the fourth aspect, in some embodiments, the configuration information of the area includes the city and/or the country, and the second transceiver module is further configured to determine, based on a local map, actual geographic area information corresponding to the city and/or the country.

In a fifth aspect, embodiments of the present disclosure provide a network device, including: at least one processor; and a memory having stored therein instructions that, when executed by the network device, cause the network device to implement the communication method as described in the first aspect and its possible implementations.

In a sixth aspect, embodiments of the present disclosure provide a terminal, including: at least one processor; and a memory having stored therein instructions that, when executed by the terminal, cause the terminal to implement the communication method as described in the second aspect and its possible implementations.

In a seventh aspect, embodiments of the present disclosure provide a communication system, including: a network device, configured to implement the communication method as described in the first aspect and its possible implementations; and a terminal, configured to implement the communication method as described in the second aspect and its possible implementations.

In an eighth aspect, embodiments of the present disclosure provide a storage medium, having stored therein instructions that, when executed on a communication device, cause the communication device to perform the communication method as described in the first aspect, the second aspect and their possible implementations.

In a ninth aspect, embodiments of the present disclosure provide a program product that, when executed by a communication device, causes the communication device to perform the communication method as described in the first aspect, the second aspect and their possible implementations.

In a tenth aspect, embodiments of the present disclosure provide a computer program that, when run on a computer, causes the computer to execute the communication method as described in the first aspect, the second aspect and their possible implementations.

In an eleventh aspect, embodiments of the present disclosure provide a chip or a chip system. The chip or chip system includes processing circuitry. The processing circuitry is configured to perform the communication method as described in the first aspect, the second aspect and their possible implementations.

As may be appreciated, the terminal, network device, communication device, communication system, storage medium are all used to perform the methods in the embodiments of the present disclosure. Therefore, the beneficial effects that may be achieved by them may refer to the beneficial effects in the corresponding methods, which will not be repeated herein.

The embodiments of the present disclosure provide a communication method, a network device, a terminal, a communication system, and a storage medium. In some embodiments, terms such as communication method, method for processing information, method for transmitting information, method for indicating an effective area of a broadcast service, and the like may be used interchangeably; terms such as terminal, network device, communication apparatus, apparatus for processing information, and the like may be used interchangeably; terms such as system for processing information, communication system and the like may be used interchangeably.

The embodiments of the present disclosure are not exhaustive, but are merely illustrative of some embodiments, and are not intended to be a specific limitation on the scope of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of the steps in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In the embodiments of the present disclosure, unless otherwise specified and in case of no logical conflict, the terms and/or descriptions among the embodiments are consistent and may be referenced to each other, and technical features in different embodiments may be combined to form new embodiments according to their intrinsic logical relationships.

The terms used in the embodiments of the present disclosure are for the purpose of describing specific embodiments only, and are not intended to limit the present disclosure.

In the embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the" in English is used in translation, a noun after the article may be understood as a singular expression or a plural expression.

In the embodiments of the present disclosure, "a plurality of" refers to two or more.

In some embodiments, terms such as "at least one of", "one or more", "a plurality of", "multiple", may be used interchangeably.

In some embodiments, the descriptions such as "at least one of A or B," "A and/or B," "A in one case, B in another case" or "in response to one case A, in response to another case B" may include the following technical solutions depending on the situations: A is executed in some embodiments (A is executed independently from B); B is executed in some embodiments (B is executed independently from A); A or B is selected for execution in some embodiments (A and B are selectively executed); and A and B are executed in some embodiments (A and B are both executed). The same applies when there are more branches such as A, B, and C.

In some embodiments, the descriptions such as "A or B" may include the following technical solutions depending on the situations: A is executed in some embodiments (A is executed independently from B); B is executed in some embodiments (B is executed independently from A); and A or B is selected for execution in some embodiments (A and B are selectively executed). The same applies when there are more branches such as A, B, and C.

The prefix words such as "first" and "second" in embodiments of the present disclosure are only for distinguishing different described objects, and do not impose limitations on the positions, orders, priorities, quantities, contents, etc. of the described objects. For description of the described objects, reference may be made to the description of the context in the claims or the embodiments, and unnecessary restrictions should not be constituted due to the use of the prefix words. For example, if the described object is a "field", the ordinal numbers before the "field" in the "first field" and the "second field" does not limit the position or order between the "fields", and "first" and "second" do not limit whether the "fields" modified by them are in the same message, nor do they limit the order of the "first field" and the "second field". For another example, if the described object is "rank", the ordinal numbers before "rank" in "first rank" and "second rank" does not limit the priority between "rank". For another example, the number of described objects is not limited by ordinal numbers, and may be one or more. Taking "first device" as an example, the number of "devices" may be one or more. Furthermore, objects modified by different prefixes may be the same or different, for example, if the described object is the "device", the "first device" and the "second device" may be the same device or different devices, and the types thereof may be the same or different. For another example, when the described object is "information", the "first information" and the "second information" may be the same information or different information, and the content thereof may be the same or different.

In some embodiments, terms such as "including A", "containing A", "indicating A", "carrying A", may be interpreted as directly carrying A, or may be interpreted as indirectly indicating A.

In some embodiments, terms such as "in response to", "in response to determining", "in a case where", "when", "upon", "if" and the like may be used interchangeably.

In some embodiments, terms such as "greater than", "greater than or equal to", "not smaller than", "more than", "more than or equal to", "not lower than", "higher", "higher than or equal to", "not less than", "above" and the like may be used interchangeably, and terms such as "smaller than", "smaller than or equal to", "not greater than", "less than", "less than or equal to", "not more than", "lower than", "lower than or equal to", "not higher than", "below" and the like may be used interchangeably.

In some embodiments, the apparatus may be interpreted as physical or virtual, and the names thereof are not limited to those described in embodiments, and may also be understood as "apparatus", "equipment", "device", "circuit", "network element", "node", "function", "unit", "section", "system", "network", "chip", "chip system", "entity", "subject" and the like in some cases.

In some embodiments, the "network" may be interpreted as devices included in the network, e.g., an access network device, a core network device, or the like.

In some embodiments, terms such as "network device", "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)" and the like may be used interchangeably.

In some embodiments, terms such as "terminal", "terminal device", "user equipment (UE)", "user terminal", "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like may be used interchangeably.

In some embodiments, an access network device, a core network device, or a network device may be replaced by a terminal. For example, embodiments of the present disclosure may also be applied to structures where communication between an access network device, a core network device, or a network device and a terminal is replaced by communication between multiple terminals (e.g., device-to-device (D2D), vehicle-to-everything (V2X), etc.). In this case, the terminal may also have all or part of the functions of the access network device. In addition, terms such as "uplink", "downlink" and the like may also be replaced by terms corresponding to inter-terminal communication (e.g., "side"). For example, terms such as uplink channel, downlink channel and the like may be replaced by sidelink channel; terms such as uplink, downlink and the like may be replaced by sidelink.

In some embodiments, a terminal may be replaced by an access network device, a core network device, or a network device. In this case, the access network device, core network device, or network device may also have all or part of the functions of the terminal.

In some embodiments, obtaining data, information, and the like may comply with the laws and regulations of the country where the data, information, and the like are obtained.

In some embodiments, data, information, and the like may be obtained with the consent of the user.

Further, each element, each row, or each column in the table of embodiments of the present disclosure may be implemented as an independent embodiment, and any combination of any element, any row, or any column may also be implemented as an independent embodiment.

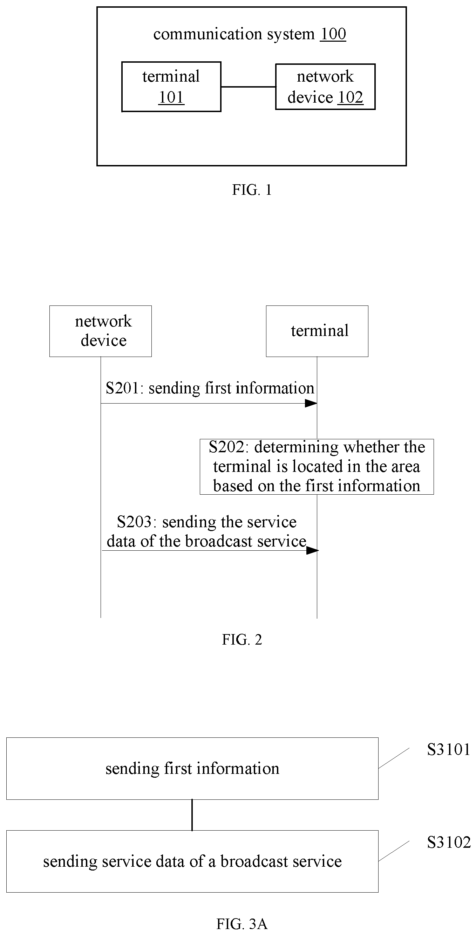

FIG. 1 is a schematic diagram illustrating an architecture of a communication system provided according to an embodiment of the present disclosure. As shown in FIG. 1, a communication system 100 includes a terminal 101 and a network device 102. The network device 102 may also be referred to as an access network device.

In some embodiments, the terminal 101 may include at least one of, but is not limited to: a mobile phone, a wearable device, an Internet of Things device, a vehicle with a communication function, a smart vehicle, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, or a wireless terminal device in smart home.

In some embodiments, the network device 102 is, for example, a node or device that accesses a terminal to a wireless network, and the access network device may include at least one of, but is not limited to: an evolved NodeB (eNB), a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system.

In some embodiments, the network device 102 may include a central unit (CU) and a distributed unit (DU), in which the CU may also be referred to as a control unit, and the protocol layer of the network device 102 may be separated by adopting the CU-DU structure, some functions of the protocol layer are centrally controlled by the CU, and some or all remaining functions of the protocol layer are distributed in the DU, and the DU is centrally controlled by the CU, but the present disclosure is not limited to this.

In some embodiments, the CU and the DU may be centrally deployed on one network device, or distributedly deployed on multiple network devices.

In some embodiments, one network device 102 may include one CU and at least one DU. One CU may be connected to multiple DUs, and one DU may only be connected to one CU.

In some embodiments, the communication system 100 may be a 5G communication system. It should be noted that the communication system 100 may also be other communication systems, for example, a 4G communication system or a 6G communication system, which is not specifically limited in the embodiments of the present disclosure.

As may be appreciated, the communication system described in embodiments of the present disclosure is to more clearly explain the technical solution of embodiments of the present disclosure, and does not constitute a limitation on the technical solution provided by the embodiments of the present disclosure. As those skilled in the art know, with the evolution of the system architecture and the emergence of new business scenarios, the technical solutions provided by the embodiments of the present disclosure are applicable to similar technical problems.

The following embodiments of the present disclosure may be applied to the communication system 100 illustrated in FIG. 1 or a part of the entities of the communication system 100, but the present disclosure is not limited to this. The entities shown in FIG. 1 are illustrative, and the communication system may include all or part of the entities shown in FIG. 1, or other entities other than those shown in FIG. 1. The number and form of the entities are arbitrary, the connection relationship between the entities is an example, the entities may not be connected or may be connected, and the connection may be in any form, including direct connection or indirect connection, and including wired connection or wireless connection.

Embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultra-wideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

The embodiments of the present disclosure may be applied to a non-terrestrial network (NTN), which may include a network or a network segment that use a relay node of a transmission equipment or a base station carried by an airborne or a space vehicle, and may also include any networks involving a non-terrestrial flying object. For example, the NTN may include satellite communication networks, high altitude platform systems (HAPs) and the like.

With the development of communication technology, satellite communication technology is regarded as an important development direction of future wireless communication technology. Communication systems supporting satellite access technology (such as 4G and 5G networks) may also be referred to as the satellite communication network. In this communication network, a terminal may access a core network (such as an evolved packet core (EPC) or a 5G core network (5GC)) through a satellite access network to carry out a service.

The 3rd generation partnership project (3GPP) has standardized the related technology of Internet of Things non-terrestrial networks (IoT NTN) and new radio non-terrestrial networks (NR NTN). Considering that a network coverage of the NR NTN and the IoT NTN is relatively extensive, for example, a cell may cover multiple countries.

For a broadcast service, the service may be designated for users in a certain area, such as a certain country or a certain city. Therefore, in a case where the NTN sends a broadcast service, it is needed to restrict an effective area of the broadcast service, which makes the following standardization work required.

In some embodiments, a system information block (SIB) signal is specified to indicate an intended service area under the condition of larger satellite coverage.

In some embodiments, a necessary signaling between a core network (CN) and a next generation radio access network (NG-RAN) is specified.

FIG. 2 is a schematic interaction diagram of a communication method according to an embodiment of the present disclosure. As shown in FIG. 2, an embodiment of the present disclosure relates to a communication method, which is performed by a communication system 100. The communication method includes step S201 to step S203.

In step S201, a network device sends first information.

In some embodiments, a terminal may receive the first information.

In some embodiments, the first information indicates an area corresponding to a broadcast service.

In some embodiments, the area corresponding to the broadcast service is an effective area for the broadcast service. In this case, the first information may indicate the effective area for the broadcast service.

In some embodiments, the effective area of the broadcast service may be an area where the terminal may receive service data of the broadcast service.

In some embodiments, the area corresponding to the broadcast service or the effective area of the broadcast service may be a geographical area. In some embodiments, the area corresponding to the broadcast service or the effective area of the broadcast service may be an area mapped onto a map.

In some embodiments, the broadcast service may be at least one of : a multimedia broadcast service (MBS) or an emergency service.

In some embodiments, the MBS may be used to support multimedia broadcast/a multimedia function, which may broadcast or multicast multimedia data to the terminal through a transmission link.

In some embodiments, the MBS may be used to support data broadcast or data multicast for services such as public safety, an IoT application, and software delivery.

In some embodiments, the emergency service may be at least one of: an earthquake and tsunami warning system (ETWS) or a commercial mobile alert system (CMAS).

In some embodiments, the ETWS may be used to support services such as a fire alarm, a flood alarm, an earthquake early warning, and a tsunami alert.

In some embodiments, the CMAS may be used to support early warnings for services such as a natural disaster, a terrorist incident, and a power system/broadcast television signal outage.

In some embodiments, in a case where the broadcast service is the MBS, the first information includes at least one of: identification information of the area, in which the identification information of the area indicates configuration information of the area; or configuration information of the area, in which the configuration information of the area indicates the area.

In some embodiments, the identification information of the area corresponding to the MBS may be an identifier of the area corresponding to the MBS.

In some embodiments, the identification information of the area corresponding to the MBS may be used to identify the area corresponding to the MBS. In this case, the first information may indicate the area corresponding to the MBS identified by the identification information.

In some embodiments, the area corresponding to the MBS may be the effective area of the MBS. In this case, the identification information of the area corresponding to the MBS may be an identifier of the effective area of the MBS.

In some embodiments, the identification information of the area corresponding to the MBS may be used to identify the effective area of the MBS. In this case, the first information may indicate the effective area of the MBS identified by the identification information.

In some embodiments, the identification information of the area corresponding to the MBS may be associated with the configuration information of the area corresponding to the MBS. In this case, there may be a correspondence between the identification information of the area corresponding to the MBS and the configuration information of the area corresponding to the MBS. This correspondence may be stored in the network device, in the terminal, or in other locations, which is not specifically limited in this embodiment.

In some embodiments, the configuration information of the area corresponding to the MBS may be: a geographical area configured for the MBS. In this case, the geographical area may be represented by a coordinate.

In some embodiments, the configuration information of the area corresponding to the MBS may be: an area mapped onto a map configured for the MBS. In this case, the geographical area may be represented by a coordinate of the area mapped onto the map.

In some embodiments, the configuration information of the area corresponding to the MBS may include at least one of: second information, third information or fourth information.

In some embodiments, the second information may indicate a coordinate of the geographical area configured for the MBS in a reference coordinate system.

In some embodiments, the second information may indicate a coordinate of the area mapped onto the map configured for the MBS in the reference coordinate system.

In some embodiments, a shape of the area represented by the coordinate indicated by the second information includes at least one of: a rectangle; a polygon; a circle; or a line.

In some embodiments, the third information may indicate that the geographical area configured for the MBS is a city.

In some embodiments, the third information may indicate that the area mapped onto the map configured for the MBS is the city.

In some embodiments, the third information may be a code for identifying different cities.

In some embodiments, the third information may include, for example, a city code, a postal code, a telephone area code, and the like.

In some embodiments, the fourth information may indicate that the geographical area configured for the MBS is a country.

In some embodiments, the fourth information may indicate that the area mapped onto the map configured for the MBS is the country.

In some embodiments, the fourth information may be a code for identifying different countries.

In some embodiments, the fourth information may include a country code.

In some embodiments, the fourth information may be, for example, a mobile country code (MCC).

In some embodiments, the area may be configured for the MBS.

In some embodiments, for example, the geographical area may be configured for the MBS.

In some embodiments, for example, the area mapped onto the map may be configured for the MBS.

In some embodiments, in a case where the broadcast service is the MBS, the first information may be carried and sent through system information.

In some embodiments, in a case where the broadcast service is the MBS, the terminal may receive the first information carried in the system information.

In some embodiments, in a case where the broadcast service is the MBS and the first information is the configuration information of the area corresponding to the MBS, the configuration information of the area corresponding to the MBS may be sent via an SIB20.

In some embodiments, in a case where the broadcast service is the MBS and the first information is the identification information of the area corresponding to the MBS and the configuration information of the area corresponding to the MBS, the identification information of the area corresponding to the MBS and the configuration information of the area corresponding to the MBS may be sent via the SIB20.

In some embodiments, in a case where the broadcast service is the MBS, the area may be configured for the MBS of the service type.

In some embodiments, in a case where the broadcast service is the MBS, for example, the geographical area may be configured for the MBS of the service type.

In some embodiments, in a case where the broadcast service is the MBS, for example, the area mapped onto the map may be configured for the MBS of the service type.

In some embodiments, each service type of the MBS may be associated with the area.

In some embodiments, the MBS may include multiple service types, and the areas associated with the multiple service types may be the same, or the areas associated with the multiple service types may be different.

In some embodiments, in a case where the broadcast service is the MBS and the MBS has multiple service types, the same area may be configured for the multiple service types of the MBS. For example, the same geographical area may be configured for each of the multiple service types of the MBS, or the same area mapped onto the map may be configured for each service type of the MBS.

In some embodiments, in a case where the broadcast service is the MBS and the MBS has multiple service types, different areas may be configured for the multiple service types of the MBS. For example, different geographical areas may be configured for each of the multiple service types of the MBS, or different areas mapped onto the map may be configured for each of the multiple service types of the MBS.

In some embodiments, in a case where the broadcast service is the MBS and the MBS has multiple service types, different areas may be configured for at least two service types of the MBS, and the same area may be configured for the remaining service types of the MBS.

In some embodiments, in a case where the broadcast service is the MBS and the MBS has multiple service types, there may be other manners for configuring the area for each of the multiple service types of the MBS, which is not specifically limited in this embodiment.

In some embodiments, in a case where the broadcast service is the MBS and the MBS has multiple service types, the service type of the MBS may be associated with a session of the MBS. In this case, the MBSs of different service types may be distinguished by different sessions of the MBS.

In some embodiments, in a case where the broadcast service is the MBS, for the MBS, the first information may be associated with at least one of: the MBS; the service type of the MBS; or the session of the MBS.

In some embodiments, for the MBS, in a case where the first information is associated with the service type of the MBS, the first information may be associated with identification information of the session under the service type of the MBS.

In some embodiments, the identification information of the session under the service type of the MBS may be at least one of: a session identity document (ID) under the service type of the MBS, or a temporary mobile group identity (TMGI).

In some embodiments, for the MBS, in a case where the first information is associated with the session of the MBS, the first information may be associated with the identification information of the session of the MBS.

In some embodiments, the identification information of the session of the MBS may be at least one of: the mbs-session ID, or the TMGI.

In some embodiments, for the MBS, in a case where the first information is associated with the MBS, the first information may be carried in the configuration information of the MBS. In this case, the configuration information of the MBS may be sent in the SIB20, or the identification information of the area corresponding to the MBS and the configuration information of the area corresponding to the MBS may also be sent in the SIB20. In this case, the configuration information of the area corresponding to the MBS may be carried in the SIB20, or the identification information of the area corresponding to the MBS and the configuration information of the area corresponding to the MBS may be carried in the SIB20.

In some embodiments, the SIB20 provides the configuration information of the MBS for a UE to obtain a multicast control channel (MCCH) configuration/a multicast traffic channel (MTCH) configuration.

In some embodiments, the configuration information of the MBS may be provided by a mcch-Config-r17 information element (IE).

In some embodiments, for the MBS, in a case where the first information is the configuration information of the area corresponding to the MBS, and the configuration information of the area corresponding to the MBS is associated with the service type of the MBS, the configuration information of the area corresponding to the MBS is associated with the identification information of the session under the service type of the MBS. In this case, the configuration information of the area corresponding to the MBS may be carried and sent through the configuration information of the MBS, and the configuration information of the MBS may be sent in an SIB. In this case, the SIB may carry the configuration information of the area corresponding to the MBS and the identification information of the session under the service type of the MBS.

In some embodiments, for the MBS, in a case where the first information is the configuration information of the area corresponding to the MBS, and the configuration information of the area corresponding to the MBS is associated with the session of the MBS, the configuration information of the area corresponding to the MBS is associated with the identification information of the session of the MBS. In this case, the configuration information of the area corresponding to the MBS may be carried and sent through the configuration information of the MBS, and the configuration information of the MBS may be sent in the SIB. In this case, the SIB may carry the configuration information of the area corresponding to the MBS and the identification information of the session of the MBS.

In some embodiments, for the MBS, in a case where the first information is the identification information of the area corresponding to the MBS, and the identification information of the area corresponding to the MBS is associated with the service type of the MBS, the identification information of the area corresponding to the MBS is associated with the identification information of the session under the service type of the MBS. In this case, the identification information of the area corresponding to the MBS may be carried and sent through the configuration information of the session under the service type of the MBS.

In some embodiments, the configuration information of the session under the service type of the MBS may be sent in a manner different from that of the SIB.

In some embodiments, for the MBS, in a case where the first information is the identification information of the area corresponding to the MBS, and the identification information of the area corresponding to the MBS is associated with the session of the MBS, the identification information of the area corresponding to the MBS is associated with the identification information of the session of the MBS. In this case, the identification information of the area corresponding to the MBS may be carried and sent through the configuration information of the session of the MBS.

In some embodiments, the configuration information of the session of the MBS may be sent in a manner different from that of the SIB.

In some embodiments, the configuration information of the session of the MBS may be provided by the an MBSBroadcastConfiguration IE or an MBS-SessionInfoList.

In an embodiment, in a case where the SIB20 includes the configuration information of the area corresponding to the MBS and the identification information of the area corresponding to the MBS, the MBSBroadcastConfiguration or the MBS-SessionInfoList includes the configuration information of the area corresponding to the MBS and the identification information of the area corresponding to the MBS.

In some embodiments, for the MBS, in a case where the first information is the identification information of the area corresponding to the MBS and the configuration information of the area corresponding to the MBS, and the identification information of the area corresponding to the MBS is associated with the service type of the MBS, the identification information of the area corresponding to the MBS is associated with the identification information of the session under the service type of the MBS. In this case, the configuration information of the area corresponding to the MBS may be carried and sent through the configuration information of the MBS, the configuration information of the MBS may be sent in the SIB, and the identification information of the area corresponding to the MBS may be carried and sent through the configuration information of the session under the service type of the MBS.

In some embodiments, for the MBS, the SIB may carry the configuration information of the area corresponding to the MBS, and the configuration information of the area corresponding to the MBS is associated with the identification information of the area corresponding to the MBS.

In some embodiments, for the MBS, in a case where the first information is the identification information of the area corresponding to the MBS and the configuration information of the area corresponding to the MBS, and the identification information of the area corresponding to the MBS is associated with the session of the MBS, the identification information of the area corresponding to the MBS is associated with the identification information of the session of the MBS. In this case, the configuration information of the area corresponding to the MBS may be carried and sent through the configuration information of the MBS, the configuration information of the MBS may be sent in the SIB, and the identification information of the area corresponding to the MBS may be carried and sent through the configuration information of the session of the MBS.

In some embodiments, for the MBS, in a case where the first information is associated with the MBS, the terminal may receive the first information carried in the configuration information of the MBS.

In some embodiments, for the MBS, in a case where the first information is the configuration information of the area corresponding to the MBS, and the configuration information of the area corresponding to the MBS is associated with the service type of the MBS, the terminal may receive the configuration information of the area corresponding to the MBS carried in the configuration information of the MBS.

In some embodiments, for the MBS, in a case where the first information is the configuration information of the area corresponding to the MBS, and the configuration information of the area corresponding to the MBS is associated with the session of the MBS, the terminal may receive the configuration information of the area corresponding to the MBS carried in the configuration information of the MBS.

In some embodiments, for the MBS, in a case where the first information is the identification information of the area corresponding to the MBS and the configuration information of the area corresponding to the MBS, and the identification information of the area corresponding to the MBS is associated with the service type of the MBS, the terminal may receive the configuration information of the area corresponding to the MBS carried in the configuration information of the MBS, and the identification information of the area corresponding to the MBS carried in the configuration information of the session under the service type of the MBS.

In some embodiments, for the MBS, in a case where the first information is the identification information of the area corresponding to the MBS and the configuration information of the area corresponding to the MBS, and the identification information of the area corresponding to the MBS is associated with the session of the MBS, the terminal may receive the configuration information of the area corresponding to the MBS carried in the configuration information of the MBS, and the identification information of the area corresponding to the MBS carried in the configuration information of the session of the MBS.

In some embodiments, in a case where the broadcast service is the ETWS, the first information may include at least one of: identification information of an area corresponding to the ETWS, or configuration information of an area corresponding to the ETWS.

In some embodiments, the identification information of the area corresponding to the ETWS may be an identifier of the area corresponding to the ETWS.

In some embodiments, the identification information of the area corresponding to the ETWS may be used to identify the area corresponding to the ETWS. In this case, the first information may indicate the area corresponding to the ETWS identified by the identification information.

In some embodiments, the area corresponding to the ETWS may be an effective area of the ETWS. In this case, the identification information of the area corresponding to the ETWS may be an identifier of the effective area of the ETWS.

In some embodiments, the identification information of the area corresponding to the ETWS may be used to identify the effective area of the ETWS. In this case, the first information may indicate the effective area of the ETWS identified by the identification information.

In some embodiments, the identification information of the area corresponding to the ETWS may be associated with the configuration information of the area corresponding to the ETWS. In this case, there may be a correspondence between the identification information of the area corresponding to the ETWS and the configuration information of the area corresponding to the ETWS. This correspondence may be stored in the network device, in the terminal, or in other locations, which is not specifically limited in this embodiment.

In some embodiments, the configuration information of the area corresponding to the ETWS may be: a geographical area configured for the ETWS. In this case, the geographical area may be represented by the coordinate.

In some embodiments, the configuration information of the area corresponding to the ETWS may be: an area mapped onto a map configured for the ETWS. In this case, the geographical area may be represented by the coordinate of the area mapped onto the map.

In some embodiments, the configuration information of the area corresponding to the ETWS may include at least one of: the second information, the third information, or the fourth information.

In some embodiments, the second information may indicate: the coordinate of the geographical area configured for the ETWS in the reference coordinate system.

In some embodiments, the second information may indicate: the coordinate of the area mapped onto the map configured for the ETWS in the reference coordinate system.

In some embodiments, the shape of the area represented by the coordinate indicated by the second information includes at least one of: the rectangle; the polygon; the circle; or the line.

In some embodiments, the third information may indicate that the geographical area configured for the ETWS is the city.

In some embodiments, the third information may indicate that the area mapped onto the map configured for the ETWS is the city.

In some embodiments, the third information may be the code for identifying different cities.

In some embodiments, the third information may include, for example, the city code, the postal code, the telephone area code, and the like.

In some embodiments, the fourth information may indicate that the geographical area configured for the ETWS is the country.

In some embodiments, the fourth information may indicate that the area mapped onto the map configured for the ETWS is the country.

In some embodiments, the fourth information may be the code for identifying different countries.

In some embodiments, the fourth information may include the country code.

In some embodiments, the fourth information may be, for example, the MCC.

In some embodiments, the area may be configured for the ETWS.

In some embodiments, for example, the geographical area may be configured for the ETWS.

In some embodiments, for example, the area mapped onto the map may be configured for the ETWS.

In some embodiments, in a case where the broadcast service is the ETWS, the first information may be carried and sent through the system information.

In some embodiments, in a case where the broadcast service is the ETWS, the terminal may receive the first information carried in the system information.

In some embodiments, in a case where the broadcast service is the ETWS and the first information is the configuration information of the area corresponding to the ETWS, the configuration information of the area corresponding to the ETWS may be sent via an SIB6.

In some embodiments, in a case where the broadcast service is the ETWS and the first information is the identification information of the area corresponding to the ETWS, the identification information of the area corresponding to the ETWS may be sent via the system information.

In some embodiments, in a case where the broadcast service is the ETWS and the first information is the identification information of the area corresponding to the ETWS and the configuration information of the area corresponding to the ETWS, the identification information of the area corresponding to the ETWS and the configuration information of the area corresponding to the ETWS may be sent via the system information.

In some embodiments, in a case where the broadcast service is the CMAS, the first information may include at least one of: identification information of an area corresponding to the CMAS, or configuration information of an area corresponding to the CMAS.

In some embodiments, the identification information of the area corresponding to the CMAS may be an identifier of the area corresponding to the CMAS.

In some embodiments, the identification information of the area corresponding to the CMAS may be used to identify the area corresponding to the CMAS. In this case, the first information may indicate the area corresponding to the CMAS identified by the identification information.

In some embodiments, the area corresponding to the CMAS may be an effective area of the CMAS. In this case, the identification information of the area corresponding to the CMAS may be an identifier of the effective area of the CMAS.

In some embodiments, the identification information of the area corresponding to the CMAS may be used to identify the effective area of the CMAS. In this case, the first information may indicate the effective area of the CMAS identified by the identification information.

In some embodiments, the identification information of the area corresponding to the CMAS may be associated with the configuration information of the area corresponding to the CMAS. In this case, there may be a correspondence between the identification information of the area corresponding to the CMAS and the configuration information of the area corresponding to the CMAS. This correspondence may be stored in the network device, in the terminal, or in other locations, which is not specifically limited in this embodiment.

In some embodiments, the configuration information of the area corresponding to the CMAS may be: a geographical area configured for the CMAS. In this case, the geographical area may be represented by the coordinate.

In some embodiments, the configuration information of the area corresponding to the CMAS may be: an area mapped onto a map configured for the CMAS. In this case, the geographical area may be represented by the coordinate of the area mapped onto the map.

In some embodiments, the configuration information of the area corresponding to the CMAS may include at least one of: the second information, the third information, or the fourth information.

In some embodiments, the second information may indicate: the coordinate of the geographical area configured for the CMAS in the reference coordinate system.

In some embodiments, the second information may indicate: the coordinate of the area mapped onto the map configured for the CMAS in the reference coordinate system.

In some embodiments, the shape of the area represented by the coordinate indicated by the second information includes at least one of: the rectangle; the polygon; the circle; or the line.

In some embodiments, the third information may indicate that the geographical area configured for the CMAS is the city.

In some embodiments, the third information may indicate that the area mapped onto the map configured for the CMAS is the city.

In some embodiments, the third information may be the code for identifying different cities.

In some embodiments, the third information may include, for example, the city code, the postal code, the telephone area code, and the like.

In some embodiments, the fourth information may indicate that the geographical area configured for the CMAS is the country.

In some embodiments, the fourth information may indicate that the area mapped onto the map configured for the CMAS is the country.

In some embodiments, the fourth information may be the code for identifying different countries.

In some embodiments, the fourth information may include the country code.

In some embodiments, the fourth information may be, for example, the MCC.

In some embodiments, the area may be configured for the CMAS.

In some embodiments, for example, the geographical area may be configured for the CMAS.

In some embodiments, for example, the area mapped onto the map may be configured for the CMAS.

In some embodiments, in a case where the broadcast service is the CMAS, the first information may be carried and sent through the system information.

In some embodiments, in a case where the broadcast service is the CMAS, the terminal may receive the first information carried in the system information.

In some embodiments, in a case where the broadcast service is the CMAS and the first information is the configuration information of the area corresponding to the CMAS, the configuration information of the area corresponding to the CMAS may be sent via the SIB6.

In some embodiments, in a case where the broadcast service is the CMAS and the first information is the identification information of the area corresponding to the CMAS, the identification information of the area corresponding to the CMAS may be sent via the system information.

In some embodiments, in a case where the broadcast service is the CMAS and the first information is the identification information of the area corresponding to the CMAS and the configuration information of the area corresponding to the CMAS, the identification information of the area corresponding to the CMAS and the configuration information of the area corresponding to the CMAS may be sent via the system information.

In some embodiments, in a case where the broadcast service is at least one of: the MBS, the ETWS, or the CMAS, the area may be configured for each of different broadcast services. For example, the area may be configured for the MBS, the area may be configured for the ETWS, and the area may be configured for the CMAS. In this case, the first information may be the configuration information of the area corresponding to each broadcast service, and the first information may not include the identification information of the area corresponding to each broadcast service.

In some embodiments, the respective areas configured for the MBS, the ETWS, and the CMAS may be the same or different.

In step S202, the terminal determines whether the terminal is located in the area based on the first information.

In some embodiments, the terminal may determine the area corresponding to the broadcast service based on the received first information, and determine whether the terminal itself is located in the area corresponding to the broadcast service by combining its actual geographical location.

In some embodiments, the terminal may determine the effective area of the broadcast service based on the received first information, and determine whether the terminal itself is located in the effective area of the broadcast service by combining its actual geographical location.

In some embodiments, in a case where the first information is not associated with the session of the MBS, the terminal may apply the first information to all service types of the MBS, or apply the first information to all sessions of the MBS.

In some embodiments, the terminal may determine whether the terminal itself is located in the area corresponding to the MBS by combining its actual geographical location, based on the received configuration information of the area carried in the configuration information of the MBS.

In some embodiments, the terminal may obtain the configuration information of the area based on the configuration information of the MBS provided for the UE in the SIB20.

In some embodiments, the terminal may obtain the configuration information of the area based on the mcch-Config-r17 IE.

In some embodiments, the terminal may determine whether the terminal itself is located in the effective area of the MBS by combining its actual geographical location, based on the received configuration information of the area carried in the configuration information of the MBS.

In some embodiments, the terminal may determine whether the terminal itself is located in the area corresponding to the MBS by combining its actual geographical location, based on the received configuration information of the area carried in the configuration information of the MBS and the identification information of the area carried in the configuration information of the session under the service type of the MBS.

In some embodiments, the terminal may receive the configuration information of the session under the service type of the MBS provided by the MBSBroadcastConfiguration or the MBS-SessionInfoList.

In some embodiments, in a case where the SIB20 includes the configuration information of the area corresponding to the MBS and the identification information of the area corresponding to the MBS, the terminal may obtain the configuration information of the area corresponding to the MBS and the identification information of the area corresponding to the MBS based on the MBSBroadcastConfiguration or MBS-SessionInfoList.

In some embodiments, the terminal may determine whether the terminal itself is located in the effective area of the MBS by combining its actual geographical location, based on the received configuration information of the area carried in the configuration information of the MBS and the identification information of the area carried in the configuration information of the session under the service type of the MBS.

In some embodiments, the terminal may determine whether the terminal itself is located in the area corresponding to the MBS by combining its actual geographical location, based on the received configuration information of the area carried in the configuration information of the MBS and the identification information of the area carried in the configuration information of the session of the MBS.

In some embodiments, the terminal may receive the configuration information of the session of the MBS provided by the MBSBroadcastConfiguration or the MBS-SessionInfoList.

In some embodiments, the terminal may determine whether the terminal itself is located in the effective area of the MBS by combining its actual geographical location, based on the received configuration information of the area carried in the configuration information of the MBS and the identification information of the area carried in the configuration information of the session of the MBS.

In some embodiments, the terminal may determine the area corresponding to the broadcast service based on the received identification information of the session carried in the configuration information of the MBS, and determine whether the terminal itself is located in the area corresponding to the broadcast service by combining its actual geographical location.

In some embodiments, the terminal may determine the effective area of the broadcast service based on the received identification information of the session carried in the configuration information of the MBS, and determine whether the terminal itself is located in the effective area of the broadcast service by combining its actual geographical location.

In some embodiments, the terminal may determine the area corresponding to the broadcast service based on the received first information carried in the system information, and determine whether the terminal itself is located in the area corresponding to the broadcast service by combining its actual geographical location.

In some embodiments, the terminal may determine the effective area of the broadcast service based on the received first information carried in the system information, and determine whether the terminal itself is located in the effective area of the broadcast service by combining its actual geographical location.

In some embodiments, in a case where the configuration information of the area received by the terminal includes the city and/or the country, the terminal may determine the actual geographical area information corresponding to the city and/or county based on the local map, thereby determining whether the terminal itself is located in the area corresponding to the broadcast service.

In some embodiments, in a case where the configuration information of the area received by the terminal includes the city and/or the county, the terminal may determine the actual geographical area information corresponding to the city and/or country based on the local map, thereby determining whether the terminal itself is located in the effective area of the broadcast service.

In step S203, the network device sends the service data of the broadcast service.

In some embodiments, the network device may send the service data of the broadcast service in a broadcast manner.

In some embodiments, in a case where the terminal determines that it is located in the area corresponding to the broadcast service, the terminal receives the service data of the broadcast service.

In some embodiments, in a case where the terminal determines that it is located in the effective area of the broadcast service, the terminal receives the service data of the broadcast service.

In some embodiments, the names of information and the like are not limited to the names recorded in the embodiments. Terms such as "information", "message", "signal", "signaling", "report", "configuration", "indication", "instruction", "command", "channel", "parameter", "field", "field", "symbol", "symbol", "codebook", "codeword", "codepoint", "bit", "data", "program", "chip" and the like may be used interchangeably.

In some embodiments, terms such as "radio", "wireless", "radio access network (RAN)", "access network (AN)", "RAN-based" and the like may be used interchangeably.

In some embodiments, "acquiring," "obtaining," "getting," "receiving," "transmitting," "bidirectional transmission," and "sending and/or receiving" may be used interchangeably, and may be interpreted as receiving from other entities, obtaining from protocols, obtaining from higher layers, obtaining by self-processing, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, the judgment or determination may be performed by a value represented by 1 bit (0 or 1), by a true/false value (boolean) represented by true or false, or by numerical comparison (e.g., comparison with a predefined value), but is not limited thereto.

The communication method involved in the embodiments of the present disclosure may include at least one of steps S201 to S203. For example, step S201 may be implemented as an independent embodiment, and a combination of steps S201, S202, and S203 may be implemented as an independent embodiment, which is not limited in the embodiments of the present disclosure.

In some embodiments, steps S202 and S203 are optional, and one or more of these steps may be omitted or substituted in different embodiments.

In some embodiments, reference may be made to other optional implementations recorded before or after the specification corresponding to FIG. 2.

FIG. 3A is a schematic flowchart of a communication method performed by a network device according to an embodiment of the present disclosure. As shown in FIG. 3A, an embodiment of the present disclosure relates to a communication method, which includes steps S3101 to S3102.

In step S3101, first information is sent.

For the optional implementation of step S3101, reference may be made to the optional implementation of step S201 in FIG. 2 and other relevant parts in the embodiments involved in FIG. 2, which will not be repeated herein.

In step S3102, service data of a broadcast service is sent.

For the optional implementation of step S3102, reference may be made to the optional implementation of step S203 in FIG. 2 and other relevant parts in the embodiments involved in FIG. 2, which will not be repeated herein.

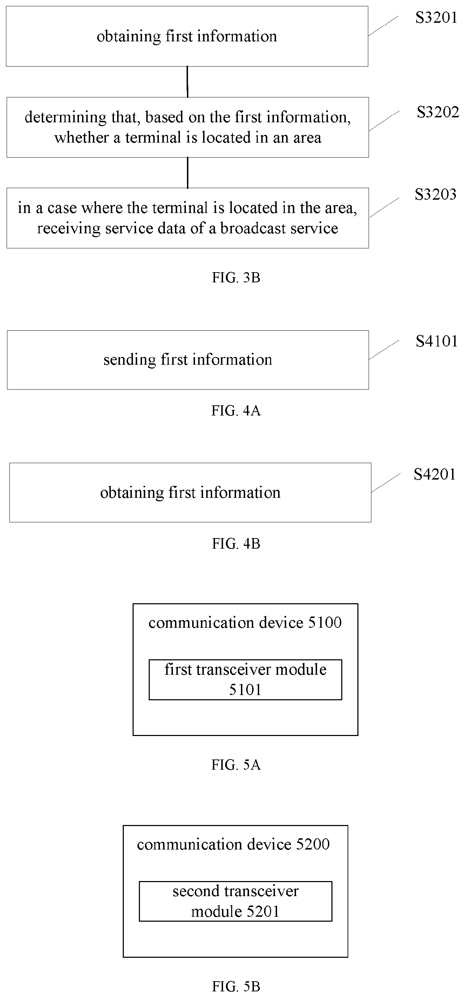

FIG. 3B is a schematic flowchart of a communication method performed by a terminal according to an embodiment of the present disclosure. As shown in FIG. 3B, an embodiment of the present disclosure relates to a communication method, which includes steps S3201 to S3203.

In step S3201, first information is obtained.

For the optional implementation of step S3201, reference may be made to the optional implementation of step S201 in FIG. 2 and other relevant parts in the embodiments involved in FIG. 2, which will not be repeated herein.

In step S3202, it is determined that, based on the first information, whether a terminal is located in an area.

For the optional implementation of step S3202, reference may be made to the optional implementation of step S202 in FIG. 2 and other relevant parts in the embodiments involved in FIG. 2, which will not be repeated herein.

In step S3203, in a case where the terminal is located in the area, service data of a broadcast service is received.

For the optional implementation of step S3203, reference may be made to the optional implementation of step S203 in FIG. 2 and other relevant parts in the embodiments involved in FIG. 2, which will not be repeated herein.

FIG. 4A is another schematic flowchart illustrating a communication method performed by a network device according to an embodiment of the present disclosure. As shown in FIG. 4A, an embodiment of the present disclosure relates to a communication method, which includes step S4101.

In step S4101, first information is sent.

For the optional implementation of step S4101, reference may be made to the optional implementation of step S201 in FIG. 2 and other relevant parts in the embodiments involved in FIG. 2, which will not be repeated herein.

FIG. 4B is another schematic flowchart illustrating a communication method performed by a terminal according to an embodiment of the present disclosure. As shown in FIG. 4B, an embodiment of the present disclosure relates to a communication method, which includes step S4201.

In step S4201, first information is obtained.

For the optional implementation of step S4201, reference may be made to the optional implementation of step S201 in FIG. 2 and other relevant parts in the embodiments involved in FIG. 2, which will not be repeated herein.

In some embodiments, the network device may configure an effective area for a broadcast service.

In some embodiments, the broadcast service may be at least one of: an MBS, an ETWS, or a CMAS.

In some embodiments, for the MBS, the network device may configure different effective areas for the MBS of different service types or different sessions of the MBS.

In some embodiments, configuration information of the effective area of the MBS may be associated with a session ID of the MBS.

In some embodiments, the session ID of the MBS may be at least one of: an mbs-session ID, or a TMGI.

In some embodiments, the configuration information of the effective area associated with the session ID of the MBS may be sent through an SIB20.

In some embodiments, the UE determines the effective area of the MBS based on the session ID of the MBS in the received configuration information of the effective area of the MBS.

In some embodiments, in a case where the configuration information of the effective area is not associated with any session ID of the MBS (for example, only the effective area is configured in a system message), the terminal considers that the configuration information of the effective area applies to all MBS.

In some embodiments, the effective area of the MBS may be associated with an area ID of the effective area. In this case, the effective area of the MBS and the area ID of the effective area may be sent through the SIB20.

In some embodiments, the area ID of the effective area may be added to the configuration information of the MBS, or the area ID may be added to session info of the MBS.

In some embodiments, the UE determines the effective area of the MBS based on the area ID of the effective area.

In some embodiments, in a case where there is no area ID of the effective area in the configuration information of the MBS, the UE ignores the configuration information of the effective area sent by the network device.

In some embodiments, for the ETWS, an effective area of the ETWS is added in an SIB6.

In some embodiments, the effective area may include at least one of: a rectangle, a polygon, a circle, a line, a city, or a country.

In some embodiments, in a case where the effective area is at least one of the rectangle, the polygon, the circle, or the line, the effective area may be represented by a coordinate system.

In some embodiments, in a case where the effective area is the country, the country may be represented by an MCC.

In some embodiments, in a case where the effective area is the city, the city may be represented by a code.

In some embodiments, in a case where the effective area is the city or the country, the UE determines whether it is in the effective area based on reality. For example, the UE may determine whether it is in the effective area based on a locally stored map.

Embodiments of the present disclosure also provide a device for implementing any of the above methods, for example, a device including units or modules for implementing the steps performed by the terminal in any of the above methods. For another example, another device is also provided, which includes units or modules for implementing the steps performed by the network device (such as an access network device) in any of the above methods.

It should be understood that the division of each unit or module in the above device is only a division of logical functions, which may be fully or partially integrated into a physical entity or physically separated in actual implementation. Moreover, the units or modules in the device may be implemented in the form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a general-purpose processor, such as a central processing unit (CPU) or a microprocessor, and the memory is a memory in the device or a memory outside the device. Alternatively, the units or modules in the device may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) or the like.

As shown in FIG. 5A, FIG. 5A is a block diagram illustrating a communication device according to an embodiment of the present disclosure. The structure of the communication device 5100 may be as shown in FIG. 5A. The communication device 5100 may be a network device. The communication device 5100 includes a first transceiver module 5101. In some embodiments, the first transceiver module 5101 is configured to send first information, in which the first information indicates an area corresponding to a broadcast service. In some embodiments, the first transceiver module 5101 is configured to perform at least one of the communication steps such as sending and/or receiving executed by the network device in any of the above methods (for example, step S3101 and step S3102), which will not be repeated herein.

In some embodiments, the first transceiver module 5101 may include a sending module and/or a receiving module, and the sending module and the receiving module may be separate or integrated together. Optionally, the first transceiver module 5101 may be interchanged with the transceiver.

As shown in FIG. 5B, FIG. 5B is a block diagram illustrating a communication device according to an embodiment of the present disclosure. The structure of the communication device 5200 may be as shown in FIG. 5B. The communication device 5200 may be a terminal. The communication device 5200 includes a second transceiver module 5201. In some embodiments, the second transceiver module 5201 is configured to receive first information, in which the first information indicates an area corresponding to a broadcast service. In some embodiments, the second transceiver module 5201 is configured to perform at least one of the communication steps such as sending and/or receiving executed by the terminal in any of the above methods (for example, step S3201 and step S3203), which will not be repeated herein.

In some embodiments, the second transceiver module 5201 may include a sending module and/or a receiving module, and the sending module and the receiving module may be separate or integrated together. Optionally, the second transceiver module 5201 may be interchanged with the transceiver.

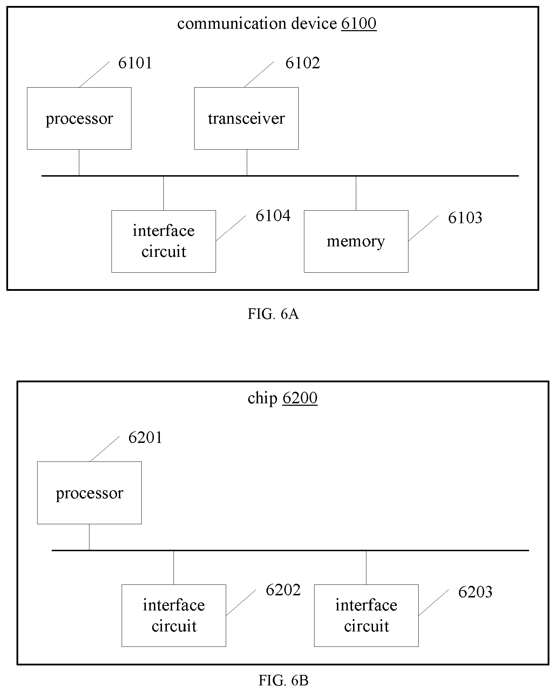

FIG. 6A is a block diagram of a communication device according to an embodiment of the present disclosure. The communication device 6100 may be a network device (such as a base station), a terminal (such as user equipment), a chip, a chip system, or a processor that supports a network device to implement any one of the above methods, or a chip, a chip system, or a processor that supports a terminal to implement any one of the above methods. The communication device 6100 may be configured to implement the methods as described in the above-mentioned method embodiments. For details, reference may be made to the description in the above-mentioned method embodiments.

As shown in FIG. 6A, a communication device 6100 includes one or more processors 6101. The processor 6101 may be a general-purpose processor or a special-purpose processor, for example, a baseband processor or a central processing unit. The baseband processor may be used to process communication protocols and communication data, and the central processing unit may be used to control communication devices (such as a base station, a baseband chip, a terminal, a terminal chip, a DU or a CU, etc.), execute programs, and process program data. Optionally, the communication device 6100 is configured to perform any of the above methods. Optionally, one or more processors 6101 are configured to invoke instructions to cause the communication device 6100 to perform any of the above methods.

In some embodiments, the communication device 6100 further includes one or more transceivers 6102. When the communication device 6100 includes one or more transceivers 6102, at least one of the communication steps such as sending and/or receiving steps (for example, but not limited to, steps S201 and S203) in the above methods is performed by the transceiver 6102, and at least one of the other steps (for example, but not limited to, step S202) in the above methods is performed by the processor 6101. In optional embodiments, the transceiver may include a receiver and/or a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

In some embodiments, the communication device 6100 further includes one or more memories 6103 for storing data. Optionally, all or part of the memories 6103 may also be located outside the communication device 6100. In optional embodiments, the communication device 6100 may include one or more interface circuits 6104. Optionally, the interface circuits 6104 are connected to the memory 6103. The interface circuits 6104 may be configured to receive data from the memory 6103 or other devices, and may be configured to send data to the memory 6103 or other devices. For example, the interface circuits 6104 may read data stored in the memory 6103 and send the data to the processor 6101.

The communication device 6100 described in the above embodiments may be a network device or a terminal, but the scope of the communication device 6100 described in the present disclosure is not limited thereto, and the structure of the communication device 6100 may not be limited to FIG. 6A. The communication device 6100 may be an independent device or part of a larger device. For example, the communication device 5100 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 6B is a block diagram of a chip provided in an embodiment of the present disclosure. For the case where the communication device 6100 may be a chip or a chip system, reference may be made to the block diagram of the chip 6200 shown in FIG. 6B, but the present disclosure is not limited thereto.

The chip 6200 includes one or more processors 6201, and the chip 6200 is configured to perform any one of the above methods.

In some embodiments, the chip 6200 further includes one or more interface circuits 6202. Optionally, terms such as interface circuit, interface, transceiver pin and the like may be used interchangeably. In some embodiments, the chip 6200 further includes one or more memories 6203 for storing data. Optionally, all or some of the memories 6203 may be located outside the chip 6200. Optionally, the interface circuits 6202 are connected to the memory 6203, the interface circuits 6202 may be configured to receive data from the memory 6203 or other devices, and may be configured to send data to the memory 6203 or other devices. For example, the interface circuits 6202 may read data stored in the memory 6203 and send the data to the processor 6201.

In some embodiments, at least one of the communication steps such as sending and/or receiving steps in the above methods is performed by the interface circuits 6202. The interface circuit 6202 performing the communication steps such as sending and/or receiving steps in the above methods specifically means, for example, that the interface circuit 6202 performs data interaction among the processor 6201, the chip 6200, the memory 6203 or the transceiver component.

The modules and/or components described in the respective embodiments of the virtual apparatus, physical apparatus, chip and the like may be arbitrarily combined or separated as appropriate. Optionally, part or all of the steps may also be performed by multiple modules and/or components in cooperation, which is not limited thereto.

The present disclosure further provides a storage medium, which has stored therein instructions that, when executed on the communication device 6100, cause the communication device 6100 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 6100, causes the communication device 6100 to perform any one of the above methods. Optionally, the above-mentioned program product is a computer program product.

The present disclosure further provides a computer program that, when executed on a computer, causes the computer to perform functions of any one of the above-mentioned method embodiments.

## Claims

1. A communication method, applied to a network device, comprising:
sending first information, wherein the first information indicates an area corresponding to a broadcast service.

2. The method according to claim 1, wherein the area corresponding to the broadcast service is an effective area for the broadcast service.

3. The method according to claim 1 or 2, wherein the first information comprises at least one of:
identification information of the area, wherein the identification information of the area indicates configuration information of the area; or
configuration information of the area, wherein the configuration information of the area indicates the area.

4. The method according to any one of claims 1 to 3, wherein the broadcast service is at least one of:
a multimedia broadcast service;
an earthquake and tsunami warning system; or
a commercial mobile alert system.

5. The method according to any one of claims 1 to 4, further comprising:
configuring an area for the broadcast service.

6. The method according to any one of claims 1 to 4, wherein the broadcast service is a multimedia broadcast service, and the method further comprises:
configuring an area for a multimedia broadcast service of a service type.

7. The method according to claim 6, wherein the multimedia broadcast service has a plurality of service types, and areas configured for the multimedia broadcast services of the plurality of service types are the same, or areas configured for the multimedia broadcast services of the plurality of service types are different.

8. The method according to claim 6 or 7, wherein the multimedia broadcast service of the service type is associated with a session of the multimedia broadcast service.

9. The method according to any one of claims 6 to 8, wherein for the multimedia broadcast service, the first information is associated with at least one of:
the multimedia broadcast service;
the service type of the multimedia broadcast service; or
a session of the multimedia broadcast service.

10. The method according to claim 9, wherein the first information is associated with the service type of the multimedia broadcast service or the first information is associated with the session of the multimedia broadcast service, and the first information is further associated with identification information of the session of the multimedia broadcast service.

11. The method according to claim 9, wherein the first information is associated with the multimedia broadcast service, and the first information is carried and sent through configuration information of the multimedia broadcast service.

12. The method according to claim 9 or 10, wherein the first information is the configuration information of the area, the configuration information of the area is associated with the service type of the multimedia broadcast service or the session of the multimedia broadcast service, and the configuration information of the area is carried and sent through configuration information of the multimedia broadcast service.

13. The method according to claim 9 or 10, wherein the first information is identification information of the area and configuration information of the area, the identification information of the area is associated with the service type of the multimedia broadcast service or the session of the multimedia broadcast service, the configuration information of the area is carried and sent through configuration information of the multimedia broadcast service, and the identification information of the area is carried and sent through configuration information of the session.

14. The method according to any one of claims 1 to 13, wherein the first information is carried and sent through system information.

15. The method according to any one of claims 1 to 14, wherein configuration information of the area comprises at least one of:
second information, wherein the second information indicates a coordinate of the area in a reference coordinate system;
third information, wherein the third information indicates a city; or
fourth information, wherein the fourth information indicates a country.

16. The method according to claim 15, wherein a shape of the area represented by the coordinate indicated by the second information comprises at least one of:
a rectangle;
a polygon;
a circle; or
a line.

17. The method according to claim 15, wherein the third information comprises a city code.

18. The method according to claim 15, wherein the fourth information comprises a country code.

19. A communication method, applied to a terminal, comprising:
receiving first information, wherein the first information indicates an area corresponding to a broadcast service.

20. The method according to claim 19, wherein the area corresponding to the broadcast service is an effective area for the broadcast service.

21. The method according to claim 19 or 20, after receiving the first information, further comprising:
determining, based on the first information, whether the terminal is located in the area.

22. The method according to any one of claims 19 to 21, wherein the terminal is located in the area, and the method further comprises:
receiving service data of the broadcast service.

23. The method according to any one of claims 19 to 22, wherein the first information comprises at least one of:
identification information of the area, wherein the identification information of the area indicates configuration information of the area; or
configuration information of the area, wherein the configuration information of the area indicates the area.

24. The method according to any one of claims 19 to 23, wherein the broadcast service is at least one of:
a multimedia broadcast service;
an earthquake and tsunami warning system; or
a commercial mobile alert system.

25. The method according to any one of claims 19 to 24, wherein the broadcast service corresponds to an area.

26. The method according to any one of claims 19 to 24, wherein the broadcast service is a multimedia broadcast service, and a multimedia broadcast service of a service type corresponds to an area.

27. The method according to claim 26, wherein the multimedia broadcast service has a plurality of service types, and areas corresponding to the multimedia broadcast services of the plurality of service types are the same, or areas corresponding to the multimedia broadcast services of the plurality of service types are different.

28. The method according to claim 26 or 27, wherein the multimedia broadcast service of the service type is associated with a session of the multimedia broadcast service.

29. The method according to any one of claims 26 to 28, wherein for the multimedia broadcast service, the first information is associated with at least one of:
the multimedia broadcast service;
the service type of the multimedia broadcast service; or
a session of the multimedia broadcast service.

30. The method according to claim 29, wherein the first information is associated with the service type of the multimedia broadcast service or the first information is associated with the session of the multimedia broadcast service, and the first information is further associated with identification information of the session of the multimedia broadcast service.

31. The method according to claim 29, wherein the first information is associated with the multimedia broadcast service, and the first information carried in configuration information of the multimedia broadcast service is received.

32. The method according to claim 29 or 30, wherein the first information is the configuration information of the area, the configuration information of the area is associated with the service type of the multimedia broadcast service or the session of the multimedia broadcast service, and the configuration information of the area carried in configuration information of the multimedia broadcast service is received.

33. The method according to claim 29 or 30, wherein the first information is the identification information of the area and the configuration information of the area, the identification information of the area is associated with the service type of the multimedia broadcast service or the session of the multimedia broadcast service, the configuration information of the area carried in the configuration information of the multimedia broadcast service and the identification information of the area carried in configuration information of the session are received.

34. The method according to any one of claims 29 to 33, wherein the first information is not associated with the session of the multimedia broadcast service, and the first information is applied to all service types of the multimedia broadcast service or all sessions of the multimedia broadcast service.

35. The method according to any one of claims 19 to 34, wherein the first information carried in system information is received.

36. The method according to any one of claims 19 to 35, wherein the configuration information of the area comprises at least one of:
second information, wherein the second information indicates a coordinate of the area in a reference coordinate system;
third information, wherein the third information indicates a city; or
fourth information, wherein the fourth information indicates a country.

37. The method according to claim 36, wherein a shape of the area represented by the coordinate indicated by the second information comprises at least one of:
a rectangle;
a polygon;
a circle; or
a line.

38. The method according to claim 36, wherein the third information comprises a city code.

39. The method according to claim 36, wherein the fourth information comprises a country code.

40. The method according to claim 36 or 37, wherein the configuration information of the area comprises the city and/or the country, and the method further comprises:
determining, based on a local map, actual geographic area information corresponding to the city and/or the country.

41. A network device, comprising:
a first transceiver module, configured to send first information, wherein the first information indicates an area corresponding to a broadcast service.

42. A terminal, comprising:
a second transceiver module, configured to receive first information, wherein the first information indicates an area corresponding to a broadcast service.

43. A network device, comprising:
at least one processor; and
a memory having stored therein instructions that, when executed by the network device, cause the network device to implement the communication method according to any one of claims 1 to 18.

44. A terminal, comprising:
at least one processor; and
a memory having stored therein instructions that, when executed by the terminal, cause the terminal to implement the communication method according to any one of claims 19 to 40.

45. A communication system, comprising:
a network device, configured to implement the communication method according to any one of claims 1 to 18; and
a terminal, configured to implement the communication method according to any one of claims 19 to 40.

46. A storage medium, having stored therein instructions that, when executed on a communication device, cause the communication device to perform the communication method according to any one of claims 1 to 40.
